Europäisches Patentamt

European Patent Office

Office européen des brevets

(11) Veröffentlichungsnummer: **0 424 611 A1**

# (12) EUROPÄISCHE PATENTANMELDUNG

(21) Anmeldenummer: 90113020.3

(51) Int. Cl.5: **H02K 37/06, H02K 41/03**

(22) Anmeldetag: 07.07.90

(30) Priorität: 26.10.89 DE 3935682

(43) Veröffentlichungstag der Anmeldung:
**02.05.91 Patentblatt 91/18**

(84) Benannte Vertragsstaaten:
**CH DE FR GB IT LI SE**

(71) Anmelder: **Messerschmitt-Bölkow-Blohm Gesellschaft mit beschränkter Haftung Robert-Koch-Strasse W-8012 Ottobrunn(DE)**

(72) Erfinder: **Hofmann, Fritz Rübezahlstrasse 58a W-8000 München 83(DE)**

(54) Elektrischer Antriebsmotor, insbesondere für Steuer- und Regelzwecke.

(57) Elektrischer Antriebsmotor, insbesondere für Steuer- und Regelzwecke mit einer Pol- und Spulenanordnung zur Erzeugung eines rotierend oder linear vorrückenden Ankerfeldes, der in ihren zeitlichen Erregungsphasen und geometrisch in Laufrichtung versetzte polbildende Segmente in mehreren Spuren enthält.

Die Segmente sind einzeln oder zu mehreren Spulen zugeordnet (Überlappungsfrei). Feinstufige Weiterschaltung. Bevorzugte Ausführung eines Synchronmotors wie Hysteresemotor beschrieben und dargestellt.

FIG. 11

Xerox Copy Centre

EP 0 424 611 A1

## ELEKTRISCHER ANTRIEBSMOTOR, INSBESONDERE FÜR STEUER- UND REGELZWECKE

Die Erfindung liegt auf dem Gebiet der elektrischen Antriebsmotoren, insbesondere für Steuer- oder Regelzwecke (häufig als Stellmotoren bezeichnet).

Derartige Motoren bedienen sich häufig eines rotierenden oder eines linear vorrückenden elektromagnetischen Ankerfeldes und weisen meist einen Netzanschluß, wie z.B. zwischen 110 V und 380 V und 50 bzw. 60 H auf. Häufig wird auch eine Umformung in Gleichstrom angewandt. Bekannt sind wahlweise permanent- oder fremderregte Synchronmotoren, Reluktanzmotoren, Hysteresemotoren, Induktions- oder Wirbelstrommotoren, Schrittmotoren oder Kombinationen hiervon. Eine bekannte Gleichstrommaschine mit einem magnetischen Wanderfeld ist in der DE-OS 29 41 890 und DE-OS 29 38 379 beschrieben.

Die Erfindung befaßt sich mit dem technischen Gebiet wie vorbeschrieben und hat sich zur Aufgabe gestellt, einen elektrischen Antriebsmotor insbesondere für Steuer- und Regelzwecke zu schaffen, der einen einfachen Aufbau aufweist, geringe Ausmaße aufweist, also raumsparend ausgebildet ist und feinstufig schaltbar ist.

Gelöst wird diese Aufgabe durch die im Hauptanspruch aufgeführten Merkmale. Aus- und Weiterbildungen sind in weiteren Patentansprüchen niedergelegt.

Im Gegensatz zu dem eingangs erwähnten Stand der Technik, wo das Erregerfeld weitergebildet werden soll, befaßt sich die Erfindung mit einer Weiterbildung des Ankerfeldes.

Besonders vorteilhaft ist es, daß der erfindungsgemäße Motor sehr klein baut und einfach realisierbar ist, vgl. die Ausführungsbeispiele. Darüberhinaus ist er sehr feinstufig (in Bruchteilen von Polsegmenten) weiterschaltbar. Die Spulenanordnung der neuen Polspurausbildungen zeigen keine Überkreuzungsstellen mehr, deshalb ein einfaches Wicklungsmuster und eine preiswerte Herstellung möglich. Die Polgruppen können wechselnd paarweise angeordnet sein und ebenso die Spulengruppen einschließlich spiegelbildlicher Anordnungen. Läuferseitig können Zonen elektrischer oder magnetischer Vorzugsrichtungen gegenüber den Polspuren quer oder in Laufrichtung des wandernden Ankerfeldes ausgebildet sein. Besonders vorteilhaft ist eine Ausbildung als Synchronmotor insbesondere Hysteresemotor mit Innenläufer, ohne hierauf beschränkt zu sein, selbstverständlich kann er auch als Außenläufer ausgebildet sein. Die Anwendung von modernen elektromagnetischen Materialien, insbesondere aus gepreßtem und/oder ggfs. (Kunststoff-)gebundenem Pulvermaterial ist selbstverständlich, sodaß auch eine gewünschte Form der Polkörper durch mechanische Bearbeitung leicht erzielt werden kann.

Nachstehend werden Ausführungsbeispiele der Erfindung anhand der Zeichnungen erläutert. Es zeigen:

Fig. 1 zeigt zunächst ein Pol-Vorrückschema in Laufrichtung (Ankerfeld) siehe Pfeil mit Spulenwicklung mit bifilaren Zonen, wobei eine Verteilung der Polsegment auf mehrere Spulen noch nicht vorgesehen ist,

Fig. 2 ein Vorrück-Schema in Laufrichtung (Ankerfeld) siehe Pfeil, bei mehreren Polspuren,

Fig. 3 ein Vorrück-Schema in Laufrichtung (Ankerfeld) siehe Pfeil, bei weiterschaltbaren Polsegmenten in Bruchteilen von Polbreiten,

Fig. 4 eine 1:2 Polbreiten-Weiterschaltung bei einer drehzahlprogressiven Last,

Fig. 5 eine 1,33:2 Polbreiten-Weiterschaltung bei einer drehzahlprogressiven Last,

Fig. 6 eine Spulenanordnung zu Fig. 2,

Fig. 7 eine Spulenanordnung zu Fig. 3,

Fig. 8 eine Spulenanordnung zwischen den Polsegmenten, zwei Lagen übereinander (Kreuzungsfrei),

Fig. 9 eine weitere Spulenanordnung in zwei Lagen übereinander (Kreuzungsfrei),

Fig. 10 einen elektromagnetischen Verbund von Polspuren und entsprechender Spulenanordnung,

Fig. 11 einen Hysteresemotor mit zwei Polspuren,

Fig. 12 einen Hysteresemotor als Innenläufer.

Ein Ziel der Erfindung ist es, ohne die bekannten komplizierten Spulenformen und Spulenüberlappungen auszukommen. Deshalb sieht eine Lösung der Erfindung eine Fertigung in hohen Stückzahlen bei geringen Kosten pro Spule und/oder eine Fertigung bei extrem kleinen Abmessungen des Antriebes vor, indem einfache Spulen mit Runddraht- oder Bandwicklung in einer Ebene ausgebildet angewandt werden.

Die Bandwicklung hat hierbei den Vorteil besonders niedriger Stückkosten in Serie und einen besonders hohen Füllfaktor = Leiterquerschnitt/Spulenquerschnitt. Die Runddrahtwicklung dagegen läßt sich dagegen leichter zu Spulenkombinationen verbinden.

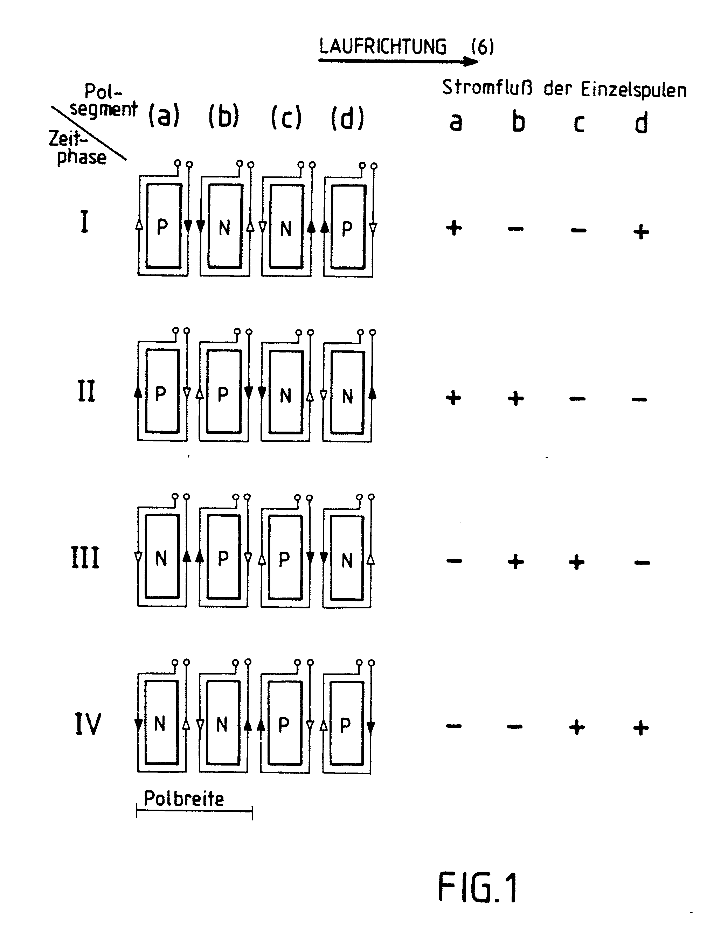

Eine Möglichkeit einfache Spulen kreuzungsfrei nebeneinander anzuordnen ist in Fig. 1 "Polvorrückungsschema, Wicklung mit bifilaren Zonen" dargestellt. Die einzelnen Polsegmente tragen hierbei je eine Spule und sind in Laufrichtung (6) des Antriebes hintereinander gereiht. Links in der Skizze ist das Stromflußschema der Einzelspulen (a, b, c, d) in den verschiedenen Zeitphasen (I, II, III, IV) dargestellt. Rechts ist das Polschema für den zugehörigen Strom der Erregerphasen eingetragen. Die vier Polsegmente bzw. vier Spulen des gezeichneten Beispieles benötigen vier zeitlich gegeneinander versetzte Erregerphasen aus der Netzseite, um ein vorrückendes Polpaar (PP), (NN) zu erzeugen. Ein Nachteil dieser Anordnung ist es aber, daß erhebliche Leiterzonen bifilar, also ohne elektromagnetischen Nutzeffekt jedoch mit Leiterverlusten, durchflossen werden. Die bifilaren Zonen wirken sich insbesondere bei Antrieben mit hoher Polzahl, bzw. kleinem Polschritt in Relation zur Antriebsbreite verluststeigernd aus.

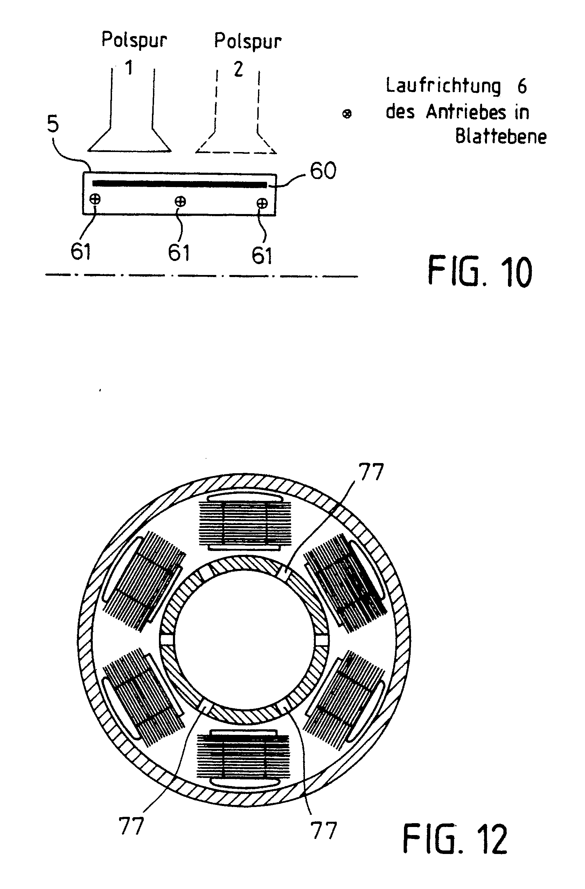

Bei der Pol- und Spulenanordnung nach der Erfindung werden die obengenannten Nachteile dadurch vermieden, daß einfache Spulen und Polsegmente nicht nur in Laufrichtung des Antriebes aneinandergereiht werden, sondern auch zusätzlich quer zur Laufrichtung auf zwei der mehrere Spuren verteilt werden. Hierbei ist es wichtig, daß die einzelnen Polspuren nicht völlig unabhängig voneinander arbeiten, sondern einen elektromagnetischer Verbund mit einem in Laufrichtung des Antriebes vorausrückenden Gesamtfeld bilden. Andernfalls würde nämlich, wie bei einer mechanischen Parallelschaltung zweier einphasig erregten Asynchronmotoren, ein Mangel im Anlaufmoment auftreten. Die Zusammenfassung des elektromagnetischen Feldes der einzelnen Polspuren zu einem Verbund kann auch durch einfache konstruktive Maßnahmen im Sekundärelement des Antriebes gefördert werden (vgl. z.B. Fig. 10 bis 12).

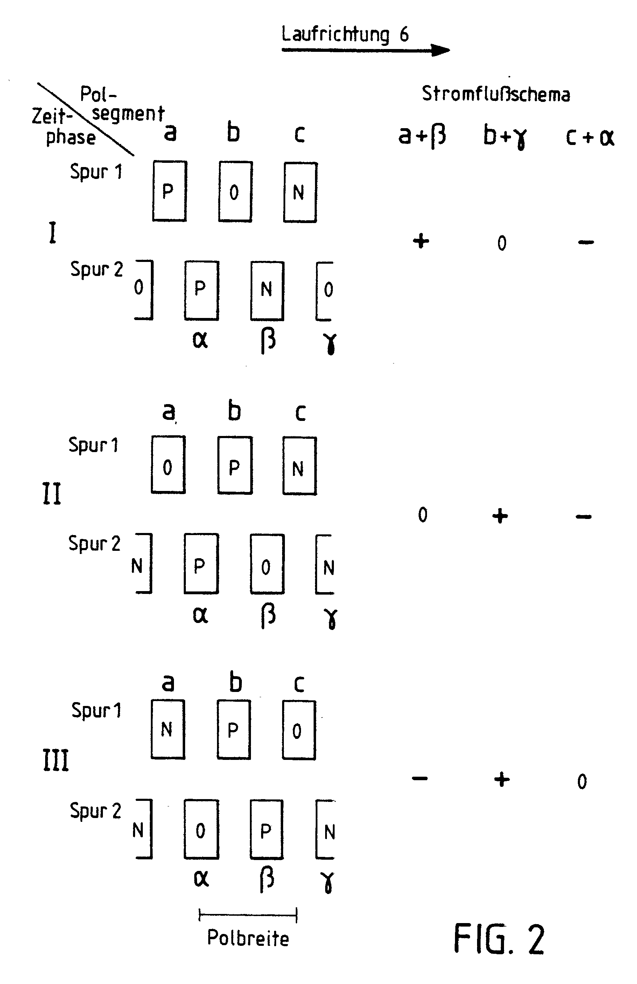

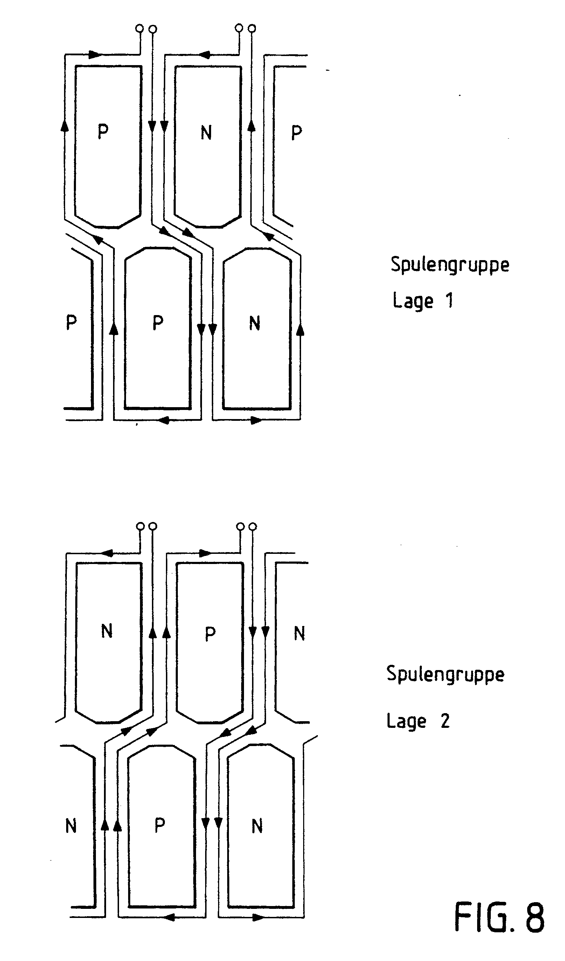

Fig. 2 "Vorrückendes mehrspuriges Polschema" zeigt eine Ausführung der Erfindung. Die sechs Polsegmente (a, b, c, $\alpha$, $\beta$, $\gamma$) des in Fig. 7 dargestellten Polschemas sind hierbei in drei Gruppen (a + $\beta$), (b + $\gamma$), (c + $\alpha$) zusammengefaßt und bilden ein in sechs Zeitphasen verrückendes Polpaar. Hiervon sind die ersten drei Zeitphasen (I, II, III) dargestellt. In den weiteren drei Zeitphasen ist die Erregung jeweils gegenüber den ersten drei Zeitphasen umgepolt. Die Laufrichtung des Antriebes ist auch hier mit Pfeil gekennzeichnet.

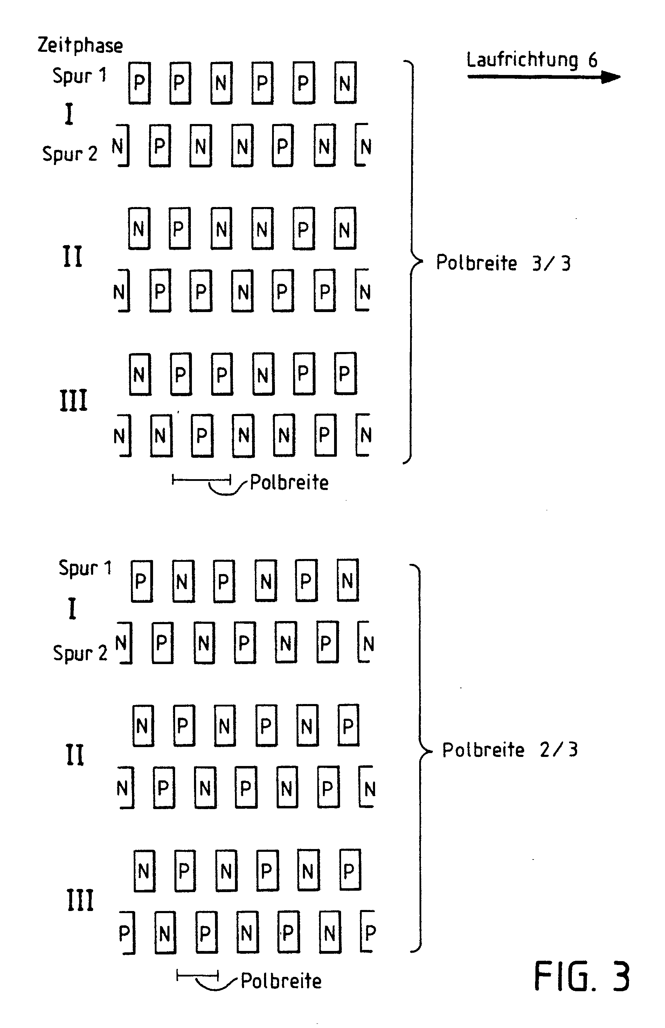

Fig. 3 "Vorrückendes mehrspuriges Polschema, umschaltbare Polbreite" zeigt eine ähnliche Polanordnung, bei der aber die resultierende Polbreite im Verhältnis 2:3 umgeschaltet und somit eine Umschaltung der Relation Synchrone Laufgeschwindigkeit : Frequenz der Erregerströme, erzielt wird. Asynchronantriebe mit umschaltbarer Polbreit werden schon seit langem zur Drehzahlsteuerung eingesetzt. Ergänzend zur Weiter- oder Polumschaltung kann auch noch eine Feinsteuerung durch veränderliche Höhe der Speisespannung erfolgen.

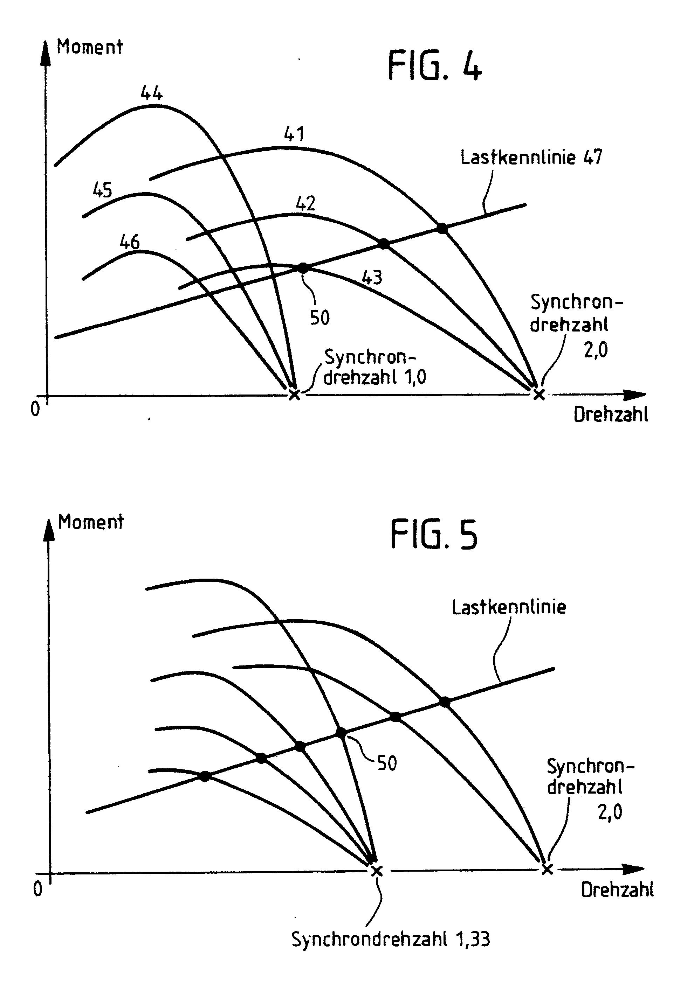

Fig. 4 zeigt eine 1:2-Umschaltung bei einer drehzahlprogressiven Last. Das Lastmoment ist über der Drehzahl in Fig. 4 aufgetragen. Der Motor entwickelt im dargestellten Beispiel bei voller Polbreite je nach Spannungshöhe die Momentenkennlinien (41, 42, 43) bzw. bei halber Polbreite die Momentenkennlinien (44, 45, 46). Die Schnittpunkte mit der Lastkennlinie (47) ergeben dann jeweils die Arbeitsdrehzahl. Diese Art der Drehzahlregelung ist aber insbesondere in der Nähe des Arbeitspunktes (50) ungünstig, weil hier ein relativ hoher Schlupf zwischen der Synchrondrehzahl und der Arbeitsdrehzahl mit einem relativ hohem Lastmoment zusammentrifft. Die Verlustleistung = (Schlupfdrehzahl x Lastmoment) ist hier sehr hoch und der Schnittwinkel zwischen der Lastkennlinie und der Motorkennlinie so flach, daß die Drehzahlstabilität gefährdet ist.

Fig. 5 zeigt eine 1,33:2-Umschaltung für eine drehzahlprogressive Last mit dem Vorteil einer feinstufigeren Polbreitenumschaltung, wie sie bei einer Pol- und Spulenanordnung nach der Erfindung möglich ist. Auch hier ist das Lastdrehmoment über der Drehzahl aufgetragen. Die in Fig. 3 dargestellte Polanordnung kann darüber hinaus auch noch so gruppiert werden, daß die resultierende Polbreite in drei Stufen (0,67:1,0:2,0) umschaltbar ist und die ergänzende Veränderung der Hohe der Speisespannung insbesondere bei niedrigen Laufgeschwindigkeiten nur noch als Feinregelung benötigt wird. Die mögliche Erweiterung dieses Schemas durch eine Erhöhung der Zahl der Polsegmente und/oder der Polspuren ergibt letzten Endes eine sehr flexible Drehzahlregelung, ohne daß die Frequenz der Speisespannung verändert werden muß.

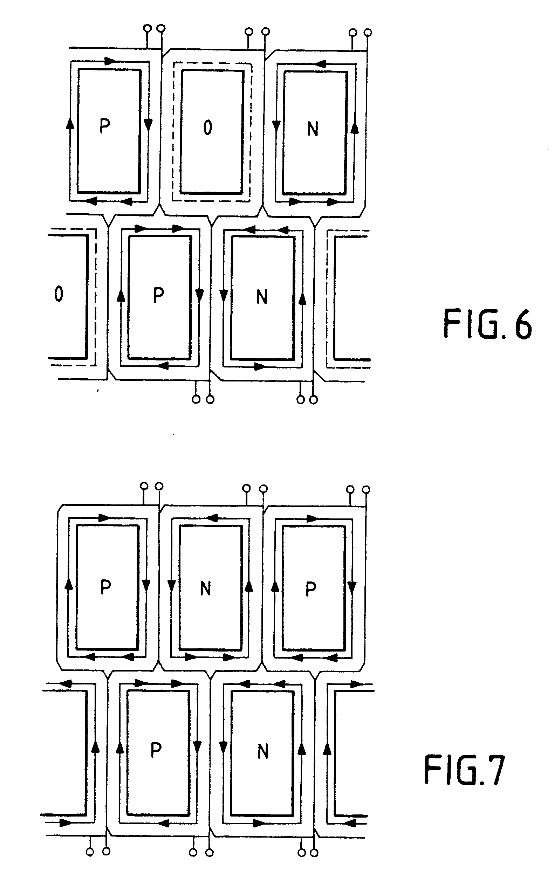

In Fig. 6 Spulenanordnung zu Fig. 2 ist eine bevorzugte Lösung für die Ausbildung der Spulen für die betreffende Polanordnung dargestellt. Die hierbei verbleibenden bifilar durchfloßenen Zonen sind hier im Vergleich zum Schema Fig. 1 geringfügig, insbesondere dann, wenn es sich um einen Antrieb mit hoher Polzahl, oder mit kleinem Polschritt in Relation zur Antriebsbreite, handelt.

Fig. 7: Spulenanordnung zu Fig. 3, gilt dementsprechend für den Fall eines solchen Polschemas.

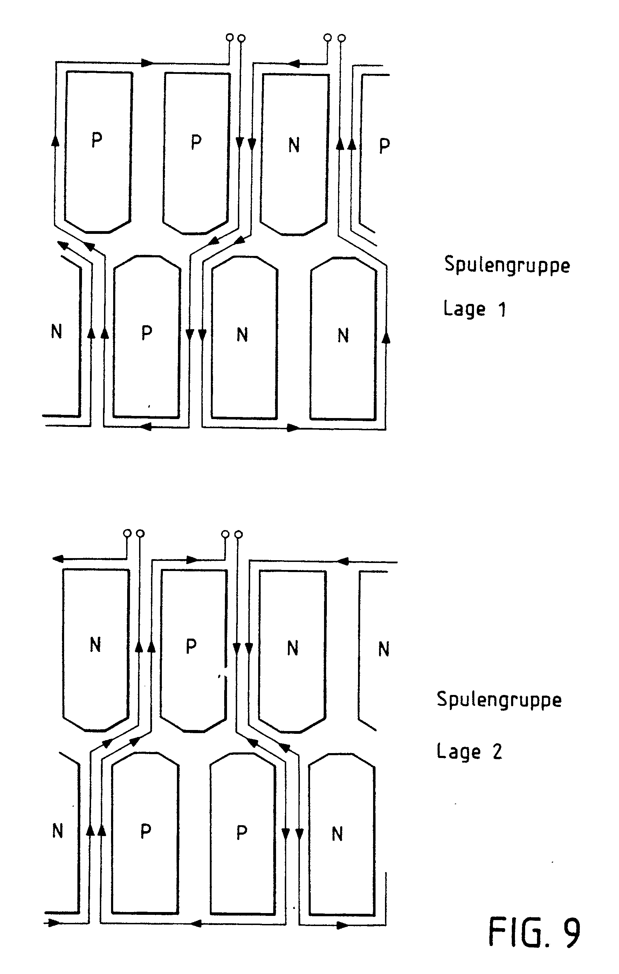

Während bei den Fig. 6 und Fig. 7 die einzelnen Spulen einlagig in die Wickelräume zwischen den Polsegmenten eingelegt werden, sind bei den unten stehenden Fig. 8 und Fig. 9 die Spulen in zwei Lagen übereinander gelegt. Man beachte aber, daß die Spulen eine Lage nicht wechselseitig übergreifen und deshalb auch hier einfache Spulen mit einer der betreffenden Lage zugeordneten Spulen-Hauptebenen verwendet werden können.

Fig. 8: Spulenanordnung zu Fig. 3, gilt für den auf dieser Figur 3 unten dargestellten Fall; Fig. 9 Spulenanordnung zu Fig. 3 gilt für den in Fig. 3 oben dargestellten Fall. Jede Spule umfaßt hier zwei bzw.

drei Polsegmente aus verschiedenen Polspuren. Für eine Polbreitenumschaltung müssen die einzelnen Spulen in verschiedenen Gruppierungen zusammengeschaltet werden, z.B. jeweils mehrere Einzelspulen wie sie in Fig. 7 dargestellt wurden. Es können natürlich auch Spulen, die jeweils mehr als ein Polsegment umfassen, umschaltbar in verschiedenen Gruppierungen zusammenarbeiten.

Es wurde bereits darauf hingewiesen, daß die verschiedenen Polspuren zumindest teilweise einen elektromagnetischen Verbund zur Bildung der Anlaufkräfte bilden sollen.

Fig. 10: Elektromagnetischer Verbund zweier Polspuren, zeigt, in einer Schnittebene quer zur Laufrichtung des Antriebes, wie die ohnehin vorhandene natürliche Verbundbildung durch ausgeprägte elektrisch leitende, und/oder magnetisch leitende, und/oder permanent-magnetische, und/oder aus Hysteresematerial gebildete, im Sekundärelement (5) quer zur Laufrichtung des Antriebes (6) liegende Materialzonen (60) verstärkt werden kann. Zusätzliche in Laufrichtung des Antriebes ausgeprägte Materialzonen (61) können die Ausbildung des Sekundärelementes ergänzen.

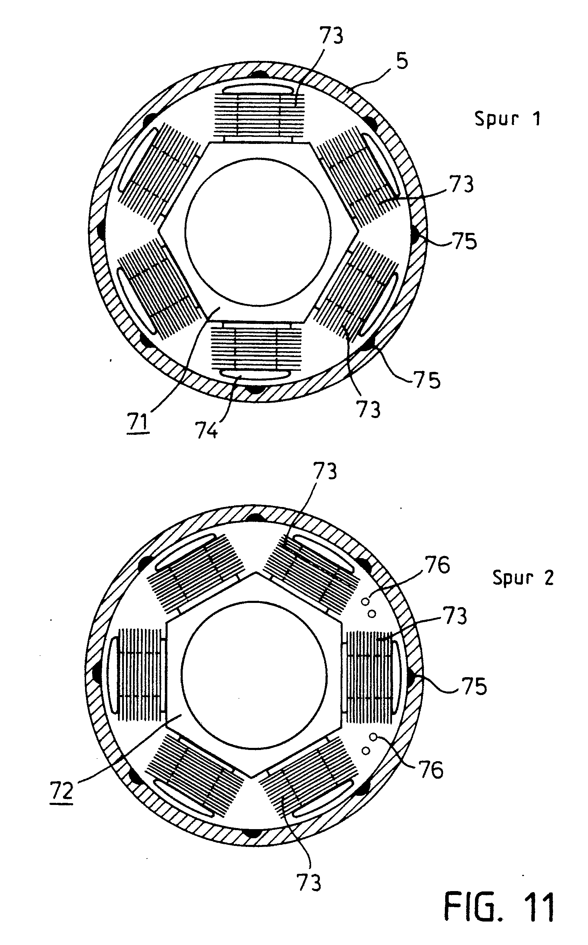

Fig. 11 zeigt einen Hysteresemotor mit zwei Polspuren als Beispiel mit je einem linken und einem rechten Polkörper (71, 72) und sechs Polsegmenten pro Polkörper. Auf jedes Polsegment ist eine einfache Erregerspule (73) und, nach Montage der Spule, eine Polkappe (74) aufgesteckt. Im vorliegenden Beispiel ist das Sekundärelement (5) als Außenläufer ausgebildet. Es besteht aus Hysteresematerial, in das durch Ätzen und Aufdampfen spezielle Leiterzonen (75) eingebracht werden. Der einzelne Polkörper wird aus mechanisch bearbeitbarem elektromagnetischen Pulvermaterial hergestellt. Der linke und der rechte Polkörper sind geometrisch um 30° versetzt. Der Zwischenraum (76) zwischen den einzelnen Polsegmenten wird zur Durchführung der Wicklungsanschlüsse des linken Polkörpers auf die rechte Motorseite benutzt. Ein einzelnen Polkörper kann hierbei wahlweise mit einem oder zwei Polpaaren nach dem Polvorrückungsschema:

```
        I     O P P O N N
        II    N O P P O N      ein Polpaar
        III   N N O P P O


        oder


        I     O P N O P N
        II    N P O N P O      zwei Polpaare
        III   N O P N O P
```

arbeiten. Die Paarung je eines linken und eines rechten Polkörpers erlaubt aber (neben dem Betrieb mit einem Polpaar) wahlweise zwei oder drei Polpaare:

```
I    O P N O P N
     P O N P O N


II   N P O N P O        zwei Polpaare
     O P N O P N


III  N O P N O P
     N P O N P O


oder


I    P N P N P N
     P N P N P N


II   N P N P N P
     P N P N P N
                        drei Polpaare

III  N P N P N P
     N P N P N P


IV   P N P N P N
     N P N P N P
```

In Fig. 12: Hysteresemotor, Ausbildung als Innenläufer, sind die in Fig. 11 verwendeten Polkörper nur geringfügig geändert, um einen Motor mit Innenläufer zu bilden. Die Bohrungen (77) dienen zur Verringerung des Streuflußes zwischen benachbarten gegenpoligen Polsegmenten.

**Ansprüche**

1. Elektrischer Antriebsmotor, insbesondere für Steuer- und Regelzwecke mit einer Pol- und Spulenanordnung zur Erzeugung eines rotierend oder linear vorrückenden Ankerfeldes, **dadurch gekennzeichnet, daß** er in Kombination enthält:
- in ihren zeitlichen Ankerfeld-Erregungsphasen und/oder geometrisch in Laufrichtung versetzte polbildende Segmente
- daß die polbildende Segmente in mehreren quer zur Laufrichtung versetzten Spuren angeordnet sind
- und daß den polbildenden Segmenten einzelnen oder zu mehreren Spulen zugeordnet sind.
2. Elektrischer Antriebsmotor nach Anspruch 1, **dadurch gekennzeichnet, daß** quer zur Laufrichtung Polsegmente (verteilt auf mehrere Spuren) versetzt angeordnet sind, und beim Vorrücken des Ankerfeldes jeweils nicht eine gesamte Polbreite weitergeschaltet wird, sondern nur Bruchteile der Breite eines Polsegmentes.
3. Elektrischer Antriebsmotor nach Anspruch 1 oder 2, **dadurch gekennzeichnet, daß** eine einzelne Spule Polsegmente aus mehreren Polspuren (in Laufrichtung parallel zueinander) umfaßt.
4. Elektrischer Antriebsmotor nach einem der vorhergehenden Ansprüche, **dadurch gekennzeichnet, daß** einzelne in Laufrichtung aufeinander folgende Polsegmente von Spulen umschlossen sind, die in ihrer Reihenfolge abwechseln, insbesondere spiegelbildlich angeordnet sind.

5. Elektrischer Antriebsmotor nach einem der vorhergehenden Ansprüche, **dadurch gekennzeichnet,** daß die Polsegmente in Richtung des vorrückenden Ankerfelds jeweils in einer Polbreite von 3/3 oder 2/3 der Breite der Polsegmente weitergeschaltet werden.

6. Elektrischer Antriebsmotor nach einem der vorhergehenden Ansprüche, **dadurch gekennzeichnet,** daß er mit einer wechselnden Folge von Magnetpolen bzw. Polspuren zu Paaren zusammengefaßt in Laufrichtung angeordnet ausgebildet ist.

7. Elektrischer Antriebsmotor nach Anspruch 6, **dadurch gekennzeichnet,** daß quer zur Laufrichtung auf mehrere Polspuren übergreifende Zonen mit magnetischer oder elektrischer Vorzugsrichtung ausgebildet sind.

8. Elektrischer Antriebsmotor nach Anspruch 6, **dadurch gekennzeichnet,** daß in Laufrichtung des vorrückenden Ankerfeldes Zonen magnetischer oder elektrischer Vorzugsrichtung ausgebildet sind, die sich zwischen den Polspuren erstrecken.

9. Elektrischer Antriebsmotor nach einem der Ansprüche 6 bis 8, **dadurch gekennzeichnet,** daß der Motor als Synchronmotor insbesondere Hysteresemotor ausgebildet ist.

10. Elektrischer Antriebsmotor nach Anspruch 9, **dadurch gekennzeichnet,** daß er einen Innenläufer ausweist.

LAUFRICHTUNG (6)

Polsegment (a) (b) (c) (d)

Zeit-
phase

Stromfluß der Einzelspulen

a    b    c    d

I      P   N   N   P      +    −    −    +

II      P   P   N   N      +    +    −    −

III      N   P   P   N      −    +    +    −

IV      N   N   P   P      −    −    +    +

Polbreite

FIG.1

Laufrichtung 6 →

| Pol-segment | | | | Stromflußschema | | |
|---|---|---|---|---|---|---|
| Zeit-phase | a | b | c | a+β | b+γ | c+α |

**I**

Spur 1: P | 0 | N

+ 0 −

Spur 2: 0 | P | N | 0

α β γ

**II**

a b c

Spur 1: 0 | P | N

0 + −

Spur 2: N | P | 0 | N

α β γ

**III**

a b c

Spur 1: N | P | 0

− + 0

Spur 2: N | 0 | P | N

α β γ

Polbreite

# FIG. 2

FIG. 3

EP 0 424 611 A1

FIG. 4

FIG. 5

10

FIG.6

FIG.7

Spulengruppe
Lage 1

Spulengruppe
Lage 2

FIG. 8

Spulengruppe

Lage 1

Spulengruppe

Lage 2

FIG. 9

Polspur
1

Polspur
2

Laufrichtung 6
des Antriebes in
Blattebene

5

60

61   61   61

**FIG. 10**

77

77        77

**FIG. 12**

Spur 1

Spur 2

FIG. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4355249 (R. F. KENWELL) <br> * Spalte 1, Zeile 48 - Spalte 2, Zeile 35 * <br> * Spalte 3, Zeile 25 - Spalte 5, Zeile 11; <br> Figuren 2, 3 * <br> --- | 1 | H02K37/06 <br> H02K41/03 |
| A | US-A-4870306 (CH. C. PETERSEN) <br> * Spalte 6, Zeile 58 - Spalte 7, Zeile 18; Figur 2 * <br> --- | 1 | |
| A | DE-A-1955136 (CONZ ELEKTRIZITÄTS-GESELLSCHAFT) <br> * Seite 3, Zeile 1 - Seite 4, Zeile 2; Figur 1 * <br> --- | 1 | |
| A | DE-A-1613370 (SIEMENS) <br> * Seite 3, Absatz 3 - Seite 4, Absatz 1; Figur 1 * <br> ----- | 1 | |

RECHERCHIERTE SACHGEBIETE (Int. Cl.5 )

H02K16/00
H02K26/00
H02K37/00
H02K41/00

Der vorliegende Recherchenbericht wurde für alle Patentansprüche erstellt

| Recherchenort | Abschlußdatum der Recherche | Prüfer |
|---|---|---|
| BERLIN | 05 FEBRUAR 1991 | GESSNER E.A.F. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument